# EUROPÄISCHE PATENTSCHRIFT

(11) **EP 1 876 842 B1**
(45) Veröffentlichungstag und Bekanntmachung des Hinweises auf die Patenterteilung: **27.03.2013**
(21) Anmeldenummer: 07111620.6
(22) Anmeldetag: 03.07.2007
(51) Int. Cl.: H04W 4/22, H04W 76/00

(54) **Verfahren und Vorrichtung zur Alarmierung eines Mobilfunkteilnehmers**
Method and device for alerting a user in a mobile wireless network
Procédé et dispositif destinés à alarmer un abonné de radio mobile

(30) Priorität: 03.07.2006 DE 102006030975
(43) Veröffentlichungstag der Anmeldung: 09.01.2008
(73) Patentinhaber: Vodafone Holding GmbH, 40213 Düsseldorf (DE)
(72) Erfinder: Trapp, Harald, 42489, Wülfrath (DE)
(74) Vertreter: Weisse, Renate

(56) Entgegenhaltungen:
- EP-A- 1 170 712
- WO-A-98/10604
- WO-A-2005/034061
- US-B1- 6 731 942

## Beschreibung

### Technisches Gebiet

Die Erfindung betrifft ein Verfahren zur Alarmierung eines Mobilfunkteilnehmers mit einem Mobilfunkendgerät über ein Mobilfunknetz, wobei eine *computergestützte* Leitstelle zur Koordinierung von Alarmrufen mit einem SMSC (=Short Message Service Center) des Mobilfunknetzes gekoppelt ist. Ferner betrifft die Erfindung ein Verfahren zur Bearbeitung einer Alarmierungs-Kurznachricht durch ein Mobilfunkendgerät eines Mobilfunkteilnehmers in einem Mobilfunknetz. Die Erfindung umfasst weiterhin eine *computergestützte* Leitstelle zur Koordinierung von Alarmrufen, wobei die *computergestützte* Leitstelle mit einem SMSC des Mobilfunknetzes gekoppelt ist, enthaltend
a) Mittel zum Erzeugen einer Alarmierungs-Kurznachricht,
b) Übertragungsmittel zum Versenden der Alarmierungs-Kurznachricht über das Mobilfunknetz an ein Mobilfunkendgerät eines zu alarmierenden Mobilfunkteilnehmers.

Außerdem betrifft die Erfindung ein Mobilfunkendgerät eines zu alarmierenden Mobilfunkteilnehmers in einem Mobilfunknetz, wobei eine Alarmierung mit einer Alarmierungs-Kurznachricht erfolgt, welche mit einer Codesequenz durch eine *computergestützte* Leitstelle erzeugt und über ein SMSC des Mobilfunknetzes zum Mobilfunkendgerät übermittelt wird.

### Stand der Technik

"BOS" ist die Abkürzung für Behörden und Organisationen mit Sicherheitsaufgaben. Der BOS-Funk in Deutschland ist Sprechfunk, der von Behörden und Organisationen mit Sicherheitsaufgaben verwendet wird, und ist in Deutschland in der zuletzt im Jahre 2000 durch das Bundesinnenministerium erlassenen BOS-Funkrichtlinie reglementiert. Der BOS-Funk ist ein nichtöffentlicher mobiler UKW-Landfunkdienst. Mittlerweile wird der "nichtöffentliche" meist analoge Funkverkehr durch öffentliche Mobilfunknetze, insbesondere nach dem GSM- oder UMTS-Standard, durch ihren hohen Verbreitungs- und Abdeckungsgrad abgelöst. Mit GSM-BOS wurde beispielsweise ein Dienst entwickelt der den erhöhten Sicherheitsanforderungen gerecht wird und in grenznahen Gebieten auch einen reibungslosen Übergang in andere Mobilfunknetze ermöglicht.

Mitarbeiter des Katastrophenschutzes oder von Einsatzkräfte von Behörden werden daher immer häufiger über ein öffentliches und digitales Mobilfunknetz alarmiert. In einer Leitstelle wird dazu eine Kurznachricht, meistens eine SMS, erzeugt, die über das Mobilfunknetz jeweils an die Mobilfunkendgeräte der Einsatzkräfte übermittelt wird. Die Einsatzkräfte bilden dabei Gruppen von Mobilfunkteilnehmern. In den meisten Fällen erhält die Leitstelle jedoch keine Rückmeldung, ob der jeweilige Empfänger eine solche Alarmierungs-Kurznachricht erhalten und gelesen hat. Es besteht jedoch seitens der Leitstelle ein Bedarf, die Anzahl möglicher Einsatzkräfte für eine geeignete Koordination zu erhalten.

*Die* EP 1170 712 *beschreibt ein Alarmierungssystem, bei dem eine Alarmmeldung der jeweiligen Alarmeinrichtung zu einer als Vermittlungsstelle ausgebildete Alarmempfangseinrichtung in einer Alarmzentrale übermittelt wird. Die Alarmempfangseinrichtung weist eine Steuereinrichtung zur Auswertung der Alarmmeldung nach Alarminhalt und voraussichtlich benötigter Zeitdauer für die Alarmierung auf. Die Steuereinrichtung steht mit einer Mobileinrichtung oder einem Funkmodem zur automatischen Weiterleitung der Alarmmeldung an ein Mobilfunkendgerät oder einer Teilnehmerendeinrichtungen des Fernsprechnetzes in Verbindung. Die angesprochenen Mobilfunkendgeräte oder Teilnehmerendeinrichtungen übermitteln eine Bestätigungsmeldung oder ein Quittungssignal zur Alarmempfangseinrichtung.*

*Die* US 6731 942 *beschreibt ein Verfahren, bei dem ein Zwei-Wege-Funkempfänger, ein sog. Pager, mit einer Sendestation in Verbindung steht. Der Pager wird beispielsweise von Einsatzkräften benutzt und die Sendestation befindet sich in einer Einsatzzentrale. Das sog. Pager-System benutzt ein Kommunikationsprotokoll, dass der Sendestation und dem Pager die Möglichkeit gibt, mit voreingestellten Meldungen zu kommunizieren. Dabei schickt die Sendestation eine Alarmmeldung mit einem bestimmten Inhalt an den Pager, der daraufhin mit einer vorher festgelegten Antwort reagieren muss. Andere Antworten des Pagers werden nicht an die Sendestation übermittelt. Die Benutzung voreingestellter Antworten auf Alarmnachrichten limitiert die Informationsmenge und beschleunigt den Informationsfluss zwischen Einsatzzentrale und Einsatzkräfte.*

*Die* WO 98 10604 *beschreibt eine Methode einen Sammelaufruf von einer Zentrale ausgehend, zu einer Vielzahl von Mobilfunkendgeräten zu übertragen. Diese sog. Point-to-Multipoint-Nachricht soll möglichst viele Mobilfunkendgeräte erreichen, die ihrerseits durch eine Point-to-Point-Nachricht antworten sollen.*

*Die* WO 2005 034061 *beschreibt ein Alarmsystem, bei dem ein SMSC (Short Message Service Center) mit Mobilfunkendgeräten per SMS kommuniziert. Bei einer Notsituation, beispielsweise bei einem Hochwasseralarm kann eine Alarmmeldung über das SMSC an die Mobilfunkendgeräte ausgesendet werden Die Kommunikation zwischen SMSC und Mobilfunkendgerät erfolgt durch mehrere SMS. Zuerst wird eine Identifizierungsnachricht (M1) vom SMSC an das Mobilfunkendgerät geschickt, die mit einer Freischaltungs-SMS (M2) beantwortet wird. Anschießend wird die Alarm-SMS (M3), bestehend aus einem Alarmcode und einem Alarmtext von dem SMSC an das Mobilfunkendgerät geschickt. Das Mobilfunkendgerät antwortet dann mit einer Bestätigungs-Nachricht (M4). Eine abschließende Nachricht vom SMSC an das Mobilfunkendgerät (M5)beendet den Notruf.*

### Offenbarung der Erfindung

Aufgabe der Erfindung ist es daher die Nachteile des Standes der Technik zu vermeiden und es zu ermöglichen, von der Leitstelle auf einfache Weise Einsatzkräfte zu alarmieren.

Erfindungsgemäß wird die Aufgabe durch ein Verfahren zur Alarmierung eines Mobilfunkteilnehmers gemäß Anspruch 1 der eingangs genannten Art mit folgenden Verfahrensschritten A(G) gelöst:
a) Erzeugen einer Alarmierungs-Kurznachricht *durch Einfügen* einer Codesequenz *in eine SMS bzw. MMS* durch die *computergestützte* Leitstelle, *wobei die Alarmierungs-Kurznachricht eine Gruppenkennung enthält, mit der die Vermittlungsstelle feststellt, wer die Alarmierungs-Kurznachricht erhalten soll,*
*b) Einfügen einer Bestätigungskennung in die Alarmierungs-Kurznachricht durch die computergestützte Leitstelle zur Anforderung einer Bestätigung,*
c) Versenden der Alarmierungs-Kurznachricht über das Mobilfunknetz an ein Identifikationsmodul des zu alarmierenden Mobilfunkendgerätes,
d) Auswertung der Codesequenz der Alarmierungs-Kurznachricht durch das Identifikationsmodul *zur Erkennung der Kurznachricht als Alarmierungs-Kurznachricht,*
*e) Ausweitung der Bestätigungskennung durch das Identifikationsmodul,*
f) Versetzen *des* Mobilfunkendgerätes in einen Alarmierungszustand durch das Identifikationsmodul *und*
*g) Versenden einer Empfangsbestätigung, mit einer Statusmeldung des Mobilfunkendgeräts, durch das Identifikationsmodul an die computergestützte Leitstelle, ob ein Mobilfunkteilnehmer erreichbar und einsatzfähig ist.*

Die Aufgabe wird ferner durch ein Verfahren zur Bearbeitung einer Alarmierungs-Kurznachricht von einem Mobilfünkendgerät gemäß Anspruch 6 der eingangs genannten Art mit folgenden Verfahrensschritten gelöst:
b) Detektieren *der* Codesequenz mittels Identifikationsmodul, die die Kurznachricht als Alarmierungs-Kurznachricht identifiziert, *wobei die Alarmierungs-Kurznachricht eine Bestätigungskennung zur Anforderung einer Bestätigung enthält,*
*c) Auswerten der Bestätigungskennung durch das Identifikationsmodul,*
*d*) Auslösen eines Alarmzustandes des Mobilfunkendgeräts des Mobilfunkteilnehmers durch das Identifikationsmodul *und*
*e) Versenden einer Empfangsbestätigung mit einer Statusmeldung des Mobilfunkendgeräts, durch das Identifikationsmodul an die computergestützte Leitstelle, ob ein Mobilfunkteilnehmer erreichbar und einsatzfähig ist*

Weiterhin wird die Aufgabe durch eine *computergestützte* Leitstelle zur Koordinierung von Alarmrufen gemäß Anspruch 9 der eingangs genannten Art gelöst, bei der
c) Mittel zum Einfügen einer Codesequenz *in die Alarmierungs-Kurznachricht,* welche das Mobilfunkendgerät des zu alarmierenden Mobilfunkteilnehmers in einen Alarmzustand versetzt, *wobei die Alarmierungs-Kurznachricht eine Gruppenkennung enthält, mit der die Vermittlungsstelle feststellt, wer die Alarmierungs-Kurznachricht erhalten soll,*
*d) Mittel zum Einfügen einer Bestätigungskennung in die Alarmierungs-Kurznachricht zur Anforderung einer Bestätigung,*
*e) Mittel zur Verarbeitung der Statusmeldung des Mobilfunkendgeräts des zu alarmierenden Mobilfunkteilnehmers*, *ob ein Mobilfunkteilnehmer erreichbar und einsatzfähig ist.*

Die Aufgabe wird zudem durch ein Mobilfunkendgerät eines zu alarmierenden Mobilfunkteilnehmers in einem Mobilfunknetz gemäß Anspruch 11 der eingangs genannten Art gelöst, bei dem die Alarmierungs-Kurznachricht eine Bestätigungskennung zur Anforderung einer Bestätigung enthält und bei dem ein *Identifikationsmodul* vorgesehen ist, welches die *Codesequenz der* Alarmierungs-Kurznachricht auswertet und das Mobilfunkendgerät in einen Alarmierungszustand versetzt *und das Identifikationsmodul Mittel zum Erzeugen und Versenden einer Empfangsbestätigung und des Status des Mobilfunkendgeräts an die computergestützte Leitstelle enthält, ob ein Mobilfunkteilnehmer erreichbar und einsatzfähig ist.*

Die Erfindung beruht auf dem Prinzip, eine Kurznachricht zur Alarmierung von einer Leitstelle an die zu alarmierenden Mobilfunkteilnehmer zusenden. Damit die Kurznachricht als Alarmierungs-Kurznachricht erkannt wird, wird eine entsprechende Codesequenz in die Kurznachricht eingefügt, die von einem Identifikationsmodul in dem Mobilfunkendgerät ausgewertet wird. Befindet sich eine solche Codesequenz in der Kurznachricht, setzt das Identifikationsmodul das Mobilfunkendgerät in einen Alarmzustand. Den Alarmzustand kann beispielsweise ein besonderer akustischer Ton bzw. Piepsen bilden. Als Alarmzustand ist auch ein Blinken der Anzeige bzw. eines anderen Leuchtmittels oder ein Vibrationsalarm denkbar. Der Mobilfunkteilnehmer weiß dann, dass eine Alarmierungs-Kurznachricht in seinem Mobilfunkendgerät vorliegt. Der Alarmzustand kann auch heißen, dass nur noch ein Kanal für die Leitstelle oder einer definierten Gruppe im Mobilfunkendgerät geöffnet wird. Andere Kommunikationsanfragen werden dann abgewiesen.

Der so alarmierte Mobilfunkteilnehmer kann nun entweder nach einer Anweisung handeln, die in der Alarmierungs-Kurznachricht enthaltend ist, oder sich mit der Leitstelle in Verbindung setzen. Dieses Verfahren eignet sich daher besonders beispielsweise bei Behörden, Katastrophenschutz oder Feuerwehr. Dadurch kann ein herkömmliches Mobilfunknetz, insbesondere nach dem GSM- oder dem UMTS-Standard, zur Alarmierung von Mobilfunkteilnehmer verwendet werden. Da Mobilfunkendgeräte über einen extrem hohen Verbreitungsgrad verfügen, brauchen keine zusätzlichen Geräte, beispielsweise Alarmpiepser, für eine Alarmierung an den entsprechenden Personenkreis ausgegeben werden. Dies spart nicht mehr Kosten, sondern hierdurch lassen sich alle relevanten Personen durch eine Leitstelle in Alarmbereitschaft setzen. Ein Gedanke der Erfindung ist es daher die entsprechende Alarmierungs-Kurznachricht in der Leitstelle zu erzeugen und sie entsprechend im Mobilfunkendgerät auszuwerten.

Die Leitstelle verfügt über geeignete Mittel um in einer Kurznachricht eine verschlüsselte oder unverschlüsselte Codesequenz einzufügen. Diese Codesequenz macht aus der Kurznachricht eine Alarmierungs-Kurznachricht. Diese Codesequenz setzt das Mobilfunkendgerät eines Mobilfunkteilnehmers in Alarmzustand. Dazu ist das Mobilfunkendgerät entsprechend mit einem *Identifikationsmodul* ausgestattet. Üblicherweise werden die Kurznachrichten nach den vorhandenen Standards SMS (=Short Message Service) oder MMS (= Multimedia Message Service) versendet.

Eine vorteilhafte Ausgestaltung des erfindungsgemäßen Verfahrens zur Alarmierung eines Mobilfunkteilnehmers ergibt sich dadurch, dass die Leitstelle eine Bestätigungskennung in die Alarmierungs-Kurznachricht einfügt. Die Bestätigungskennung wird durch das Identifikationsmodul ausgewertet. Anschließend wird eine Empfangsbestätigung, insbesondere eine Statusmeldung des Mobilfunkendgerät, durch das Identifikationsmodul an die Leitstelle versendet. Dadurch erhält die Leistelle Information beispielsweise darüber, ob ein Mobilfunkteilnehmer erreichbar und einsatzfähig ist. Das Identifikationsmodul kann dann ggf. automatisch veranlassen, dass eine entsprechende Empfangsbestätigung an die Leitstelle übermittelt wird.

Eine bevorzugte Ausbildung des erfmdungsgemäßen Verfahrens zur Alarmierung eines Mobilfunkteilnehmers ergibt sich ferner dadurch, dass der zu alarmierende Mobilfunkteilnehmer ein Mitglied einer Gruppe ist, wobei jedes Gruppenmitglied die Alarmierungs-Kurznachricht erhält. Durch diese Maßnahme wird erzielt, dass eine ganze Gruppe eine Alarmierungs-Kurznachricht erhalten kann. Die Alarmierung der Gruppenmitglieder kann dabei sequentiell oder parallel erfolgen. Dabei können durch eine einzige Alarmierungs-Kurznachricht sämtliche Gruppenteilnehmer in Alarmbereitschaft versetzt werden. Dies ist beispielsweise bei Feuerwehreinsetzen sehr wünschenswert.

Eine vorteilhafte Variante zum erfindungsgemäßen Verfahren zur Alarmierung eines Mobilfunkteilnehmers erhält man dadurch, dass das Versetzen des Mobilfunkendgerätes in einen Alarmzustand und/oder die Auswertung der Bestätigungskennung der Alarmierungs-Kurznachricht mit Hilfe einer Applikation durchgeführt wird, welche in einem Speicher der SIM-Karte (= Subscriber Identification Modul) vorliegt. Damit wird praktisch das *Identifikationsmodul* auf die SIM-Karte verlagert. Dadurch kann jedes beliebige Mobilfunkendgerät durch eine geeignete SIM-Karte in ein Mobilfunkendgerät mit einem *Identifikationsmodul* zur Alarmierung eines Mobilfunkteilnehmers umgewandelt werden. Dem Mobilfunkteilnehmer muss nur eine SIM-Karte ausgehändigt werden, die eine solche Applikation enthält.

Weiterhin wird eine bevorzugte Ausgestaltung des erfindungsgemäßen Verfahrens zur Alarmierung eines Mobilfunkteilnehmers mit einem Mobilfunkendgerät dadurch erzielt, dass die Alarmierungs-Kurznachricht durch die Leitstelle verschlüsselt wird und mit einem Decoder im Mobilfunkendgerät des zu alarmierenden Mobilfunkteilnehmers entschlüsselt wird. Dadurch wird vermieden, dass Unbefugte ggf. diese Alarmierungs-Kurznachricht "abhören" können. Die Kurznachricht kann nur von solchen Mobilfunkteilnehmern decodiert werden, deren Mobilfunkendgerät einen geeigneten Decoder aufweisen, der die Alarmierungs-Kurznachricht entschlüsseln kann. Der Decoder kann dabei auch als Applikation ausgebildet sein, die beispielsweise ebenfalls auf der SIM-Karte gespeichert ist.

Eine vorteilhafte Ausgestaltung des erfindungsgemäßen Verfahrens zur Bearbeitung einer Alarmierungs-Kurznachricht durch ein Mobilfunkendgerät erhält man dadurch, dass durch eine Nutzereingabe das Aufrufen der Alarmierungs-Kurznachricht indiziert und/oder eine Antwortnachricht an die Leitstelle erzeugt wird. Der Mobilfunkteilnehmer kann durch eine Eingabe in sein Mobilfunkendgerät festlegen, ob die Alarmbereitschaft ein- oder ausgeschaltet werden soll. Dann wird im Bedarfsfall eine entsprechende Antwortnachricht erzeugt, die an die Leitstelle übermittelt wird.

Weiterhin erhält man eine vorteilhafte Ausbildung des erfindungsgemäßen Verfahrens zur Bearbeitung einer Alarmierungs-Kurznachricht in dem eine Bestätigungskennung erkannt wird und/oder eine Bestätigungskennung in eine Antwortnachricht eingefügt wird. Dadurch kann die Leitstelle anhand der Bestätigungskennungen der Antwortnachricht unmittelbar feststellen, ob es sich um eine solche Antwortnachricht handelt. Damit kann die Leitstelle Antwortnachrichten herausfiltern, die nicht eine entsprechende Bestätigungskennung aufweisen.

Wie bereits schon bei dem entsprechenden Verfahren zuvor ausgeführt, erweist es sich als vorteilhaft, wenn die Leitstelle zur Koordinierung von Alarmrufen Mittel aufweist, welche eine Bestätigungskennung in die Alarmierungs-Kurznachricht einfügt. Die Bestätigungskennung dient dazu, das Identifikationsmodul im Mobilfunkendgerät zu veranlassen, automatisch eine Empfangsbestätigung an die Leitstelle zurückzusenden. Dadurch weiß er die Leitstelle, dass die Alarmierungs-Kurznachricht beim Mobilfunkteilnehmer angekommen ist.

Eine bevorzugte Ausführung der erfindungsgemäßen Leitstelle erhält man ferner dadurch, dass Mittel, welche aus der Bestätigungskennung der Alarmierungs-Kurznachricht das Mobilfunkendgerät zu einer Statusmeldung an die Leitstelle veranlasst. Anhand der Statusmeldungen kann die Leitstelle beispielsweise überprüfen, ob er ein zu alarmierender Mobilfunkteilnehmer einsatzfähig oder nicht einsatzfähig ist. Auch kann anhand des Status ermittelt werden wann und wo sich der alarmierte Mobilfunkteilnehmer gerade aufhält.

Eine weitere vorteilhafte Ausgestaltung der erfindungsgemäßen Leitstelle zur Koordinierung von Alarmrufen wird dadurch erzielt, dass Mittel zur Verarbeitung der Statusmeldung des Mobilfunkendgeräts des zu alarmierenden Mobilfunkteilnehmers vorgesehen sind. Durch diese Maßnahme wird erreicht, dass die Statusmeldungen eines Mobilfunkteilnehmers ausgewertet werden. Außerdem können im Fall von einer Gruppe von Mobilfunkteilnehmern mittels des jeweiligen Status eines Mobilfunkteilnehmers, diese von der Leitstelle entsprechend eingesetzt werden.

Eine vorteilhafte Ausgestaltung des Mobilfunkendgeräts eines zu alarmierenden Mobilfunkteilnehmers erhält man, indem das *Identifikationsmodul* Mittel zum Erzeugen und Versenden einer Empfangsbestätigung und/oder des Status des Mobilfunkendgerät an die Leitstelle enthält.

Weitere Vorteile ergeben sich aus dem Gegenstand der Unteransprüche, sowie der Zeichnung mit der dazugehörigen Beschreibung.

### Kurze Beschreibung der Zeichnung

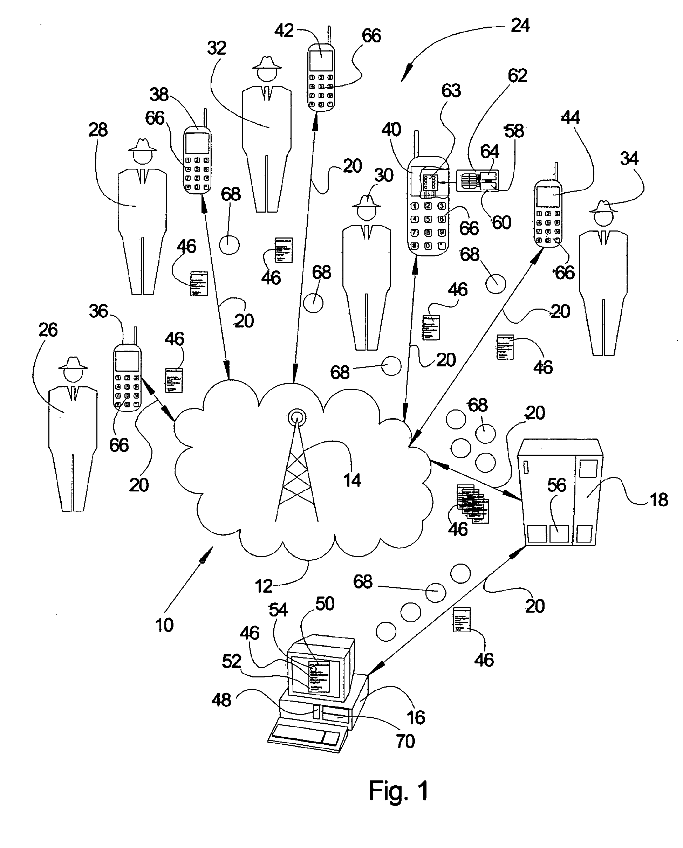

- Fig. 1: zeigt in einer schematischen Prinzipskizze ein Mobilfunknetz mit einer Leitstelle, die über das Mobilfunknetz Mobilfunkteilnehmer als Einsatzkräfte alarmiert.

### Bevorzugtes Ausführungsbeispiel

In Fig. 1 wird mit 10 ein öffentliches Mobilfunknetz bezeichnet. Das Mobilfunknetz 10 arbeitet digital und ist vorzugsweise als GSM- oder UMTS-Funknetz ausgebildet. GSM-und UMTS-Funknetze sind dem Fachmann bereits durch zahlreiche Literatur geläufig, so dass das Mobilfunknetz solches nur noch als Wolke 12 mit einem Funkmast 14 stilisiert dargestellt ist. Eine computergestützte Leitstelle 16 ist mit dem Mobilfunknetz 10 über eine Kurznachrichten-Vermittlungsstelle 18, auch SMSC (= Short Message Service Center) genannt, verbunden. Die Kurznachrichten-Vermittlungsstelle vermittelt Kurznachrichten über das Mobilfunknetz 10. Die Kurznachrichten liegen in digitaler Form, z.B. nach dem ASCII-Standard (=American Standard Code for Information Interchange) vor. Der Datenaustausch erfolgt bidirektional über Verbindungen 20, welche immer als Pfeile 22 dargestellt sind.

Eine Gruppe 24 wird aus Mobilfunkteilnehmern 26, 28, 30, 32, 34 gebildet. Jeder der Mobilfunkteilnehmer 26, 28, 30, 32, 34 verfügt zur Kommunikation insbesondere untereinander oder mit der Leitstelle 16 über ein Mobilfunkendgerät 36, 38, 40, 42, 44. Die Gruppe 24 bildet beispielsweise eine Einsatztruppe, welche von der Leitstelle 16 geführt werden soll. Die Mobilfunkteilnehmer 26, 28, 30, 32, 34 können mit den Mobilfunkendgeräte 36, 38, 40, 42, 44 untereinander oder mit der Leistelle 16 sprechen. Die Mobilfunkendgeräte 36, 38, 40, 42, 44 sind auch in der Lage, digitale Daten auszutauschen, beispielsweise in Form von Kurznachrichten oder, indem über das WAP auf das Internet zugegriffen wird. Der Datenaustausch kann bei Bedarf unidirektional aber auch bidirektional erfolgen.

Um eine Einsatztruppe 24 zu alarmieren, generiert die Leitstelle 16 eine Alarmierungs-Kurznachricht 46 als SMS. Die Leitstelle 16 fügt mit Hilfe eines Codegenerators 48 eine Codsequenz 50 in die Kurznachricht 46 ein, anhand derer ein Empfänger erkennen kann, ob es sich um eine Alarmierungs-Kurznachricht 46 handelt. Weiterhin weist die Alarmierungs-Kurznachricht 46 eine Bestätigungsanforderung 52 als Code auf. Außerdem enthält die Alarmierungs-Kurznachricht 46 neben den Einsatzinformationen bzw. Anweisungen für das einzelne Gruppenmitglied eine Gruppenkennung 54.

Diese Alarmierungs-Kurznachricht 46 wird an die Kurznachrichten-Vermittlungsstelle 18 übermittelt. Die Übermittlung der Alarmierungs-Kurznachricht 46 kann dabei verschlüsselt erfolgen, so dass Unbefugte nicht ohne weiteres an den Inhalt gelangen können. Nur autorisierte Geräte bzw. Personen können die Kurznachrichten 46 entschlüsseln. Die Kurznachrichten-Vermittlungsstelle 18 enthält eine Datenbank 56, anhand derer sie in Verbindung mit der Gruppenkennung 54 feststellen kann, wer die Alarmierungs-Kurznachricht 46 alles erhalten soll. Die Alarmierungs-Kurznachricht 46 wird entsprechend vervielfältigt und parallel oder sequentiell an die Gruppe 24 versandt.

Die Mobilfunkendgeräte 36, 38, 40, 42, 44, welche von den Mobilfunkteilnehmern 26, 28, 30, 32, 34 der Gruppe 24 verwendet werden verfügen jeweils über ein Identifikationsmodul 58. Beispielhaft ist das Mobilfunkendgerät 40, des Mobilfunkteilnehmers 30 zur einfacheren Erläuterung geöffnet dargestellt. Das Identifikationsmodul 58 befindet sich in einem Speicher 60 einer SIM-Karte 62. Die SIM-Karte 62 wird zum Auslesen und Beschreiben in einen SIM-Kartenleser 63 des Mobilfunkendgeräts 40 eingesetzt. Die SIM-Karte 62 dient für das Mobilfunkendgerät 40 als Identifikationsmittel des Mobilfunkteilnehmers 30 in dem Mobilfunknetz 10. Dazu wird beim Einschalten des Mobilfunkendgeräts 40 wird die SIM-Karte 62 zur Identifikation des durch das Mobilfunkendgerät 40 ausgelesen. Ferner befinden sich neben den Identifikationsdaten, dem Identifikationsmodul 58 auch ein Decodiermodul 64. Dieses Decodiermodul 64 ist ebenfalls als Applikation vorgesehen.

Die Mobilfunkendgeräte 36, 38, 40, 42, 44 der Gruppe 24 empfangen die ggf. verschlüsselten Alarmierungs-Kurznachrichten 46 welche von der Kurznachrichten-Vermittlungsstelle 18 über das Mobilfunknetz 10 versendet wurden. Die Mobilfunkteilnehmer 28, 30, 32, 34 der Gruppe 24 können grundsätzlich ihre Bereitschaft einstellen. Dies können sie durch eine geeignete Eingabe über eine übliche Tastatur 66 der Mobilfunkendgeräte 28, 30, 32, 34 vornehmen. Das Identifikationsmodul 58 wertet die Eingabe aus und indiziert ggf. den Bereitschaftsdienst, so dass Alarmierungs-Kurznachrichten 46 empfangen werden können.

Das Identifikationsmodul 58 wertet die Alarmierungs-Kurznachricht 46 aus, nachdem sie durch das Decodiermodul 64 decodiert wurde. Sofern es sich tatsächlich um eine Alarmierungs-Nachricht 46 handelt, was anhand der eingefügten Codesequenz 50 durch das Identifikationsmodul 58 festgestellt wird, wird das jeweilige Mobilfunkendgerät 36, 38, 40, 42, 44 der Gruppe 24 in Alarmbereitschaft gesetzt. Die Alarmbereitschaft der Mobilfunkendgeräte 36, 38, 40, 42, 44 kann beispielsweise als akustisches Signal, wie piepsen oder klingeln erfolgen. Aber auch optische Signale, wie Blinken der Anzeige oder eines Leuchtmittels kann den Alarmzustand der der Mobilfunkendgeräte 36, 38, 40, 42, 44 der Gruppe 24 anzeigen. Bei Bedarf wird der Alarmzustand beispielsweise auch als mechanische Bewegung, wie Vibrieren angezeigt. Vorzugsweise wird der Alarmzustand in Form eines Dauertons angezeigt.

Sofern die Alarmierungs-Kurznachricht 46 eine Bestätigungskennung 52 zur Anforderung einer Bestätigung enthält, erzeugt jeweils das Identifikationsmodul 58 der Mobilfunkendgeräte 36, 38, 40, 42, 44 eine Bestätigungs-Kurznachricht 68. Die Bestätigungs-Kurznachricht 68 ist in Fig.1 als Kugel dargestellt. Die Bestätigungs-Kurznachricht 68 enthält die erforderlichen Statusdaten des jeweiligen Mobilfunkteilnehmers 26, 28, 30, 32, 34 der Gruppe 24. Der Mobilfunkteilnehmer 26 signalisiert der Leitstelle 16 keine Bereitschaft, indem er verhindert, dass sein Mobilfunkendgerät 36 keine Bestätigungs-Kurznachricht 68 versendet. Alle anderen Mobilfunkteilnehmer 28, 30, 32, 34 der Gruppe 24 signalisieren der Leitstelle 16 ihre Alarmbereitschaft durch Übermittlung der Bestätigungs-Kurznachricht 68.

Die Bestätigungs-Kurznachricht 68 wird über denselben Weg über das Mobilfunknetz 10 mit der Kurznachrichten-Vermittlungsstelle 18 zurückgesandt. Die Leitstelle 16 ist nun in der Lage, anhand der Statusmeldungen der Mobilfunkteilnehmer 28, 30, 32, 34 einen Einsatz zu koordinieren. Dafür weist die Leitstelle 16 ein geeignetes Koordinationsmodul 70 auf, mit dem die Bestätigungs-Kurznachrichten 68 verarbeitet werden.

## Patentansprüche

1. Verfahren zur Alarmierung eines Mobilfunkteilnehmers (26, 28, 30, 32, 34) mit einem Mobilfunkendgerät (36, 38, 40, 42, 44) über ein Mobilfunknetz (10), wobei eine *computergestützte* Leitstelle (16) zur Koordinierung von Alarmrufen mit einer Vermittlungsstelle (18) des Mobilfunknetzes (10) gekoppelt ist, mit ***gekennzeichnet durch*** folgend Verfahrensschritte:
a) Erzeugen einer Alarmierungs-Kurznachricht (46) ***durch** Einfügen* einer Codesequenz (50) *in eine SMS bzw. MMS* **durch** die *computergestützte* Leitstelle (16), *wobei die Alarmierungs-Kurznachricht (46) eine Gruppenkennung (54) enthält, mit der die Vermittlungsstelle (18) feststellt, wer die Alarmierungs-Kurznachricht (46) erhalten soll,*
*b) Einfügen einer Bestätigungskennung (52) in die Alarmierungs-Kurznachricht (46) **durch** die computergestützte Leitstelle (16) zur Anforderung einer Bestätigung,*
c) Versenden der Alarmierungs-Kurznachricht (46) über das Mobilfunknetz (10) an ein Identifikationsmodul (58) des zu alarmierenden Mobilfunkendgerätes (36, 38, 40, 42, 44),
d) Auswertung der Codesequenz (50) der Alarmierungs-Kurznachricht (46) durch das Identifikationsmodul (58) *zur Erkennung der Kurznachricht als Alarmierungs-Kurznachricht,*
*e) Auswertung der Bestätigungskennung (52) **durch** das Identifikationsmodul (58),*
f) Versetzen *des* Mobilfunkendgerätes (36, 38, 40, 42, 44) in einen Alarmierungszustand **durch** das Identifikationsmodul (58) *und*
*g) Versenden einer Empfangsbestätigung (68), mit einer Statusmeldung des Mobilfunkendgeräts (36, 38, 40, 42, 44), **durch** das Identifikationsmodul (58) an die computergestützte Leitstelle (16), ob ein Mobilfunkteilnehmer (26, 28, 30, 32, 34) erreichbar und einsatzfähig ist.*

2. Verfahren zur Alarmierung eines Mobilfunkteilnehmers (26, 28, 30, 32, 34) mit einem Mobilfunkendgerät (36, 38, 40, 42, 44) über ein Mobilfunknetz (10) nach *Anspruch* 1, **dadurch gekennzeichnet, dass** der zu alarmierende Mobilfunkteilnehmers (26, 28, 30, 32, 34) ein Mitglied einer Gruppe (24) ist, wobei jedes Gruppenmitglied (26, 28, 30, 32, 34) die Alarmierungs-Kurznachricht (46) erhält.

3. Verfahren zur Alarmierung eines Mobilfunkteilnehmers (26, 28, 30, 32, 34) mit einem Mobilfunkendgerät (36, 38, 40, 42, 44) über ein Mobilfunknetz (10) nach einem der Ansprüche 1 bis 2, **dadurch gekennzeichnet, dass** die Auswertung der Bestätigungskennung (52) der Alarmierungs-Kurznachricht (46) mit Hilfe einer Softwareapplikation durchgeführt wird, welche in einem Speicher (60) einer SIM-Karte (62) vorliegt.

4. Verfahren zur Alarmierung eines Mobilfunkteilnehmers (26, 28, 30, 32, 34) mit einem Mobilfunkendgerät (36, 38, 40, 42, 44) über ein Mobilfunknetz (10) nach einem der Ansprüche 1 bis 3, **dadurch gekennzeichnet, dass** das Versetzen des Mobilfunkendgerätes in einen Alarmzustand mit Hilfe einer Applikation durchgeführt wird, welche in einem Speicher (60) einer SIM-Karte (62) vorliegt.

5. Verfahren zur Alarmierung eines Mobilfunkteilnehmers (26, 28, 30, 32, 34) mit einem Mobilfunkendgerät (36, 38, 40, 42, 44) über ein Mobilfunknetz (10) nach einem der Ansprüche 1 bis *4*, **dadurch gekennzeichnet, dass** die Alarmierungs-Kurznachricht (46) durch die *computergestützte* Leitstelle (16) verschlüsselt wird und mit einem Decoder (64) im Mobilfunkendgerät (36, 38, 40, 42, 44) des zu alarmierenden Mobilfunkteilnehmers (26, 28, 30, 32, 34) entschlüsselt wird.

6. Verfahren zur Bearbeitung einer Alarmierungs-Kurznachricht (46) durch ein Mobilfunkendgerät (36, 38, 40, 42, 44) eines Mobilfunkteilnehmers (26, 28, 30, 32, 34) in einem Mobilfunknetz (10) mit folgenden Verfahrensschritten:
a) Empfangen der *Alarmierungs-Kurznachricht* (46), *welche durch die computergestützte Leitstelle (16) durch Einfügen einer Codesequenz (50), in eine SMS bzw. MMS erzeugt wurde,*
***gekennzeichnet durch***
b) Detektieren *der* Codesequenz (50) mittels Identifikationsmodul (58), die die Kurznachricht als Alarmierungs-Kurznachricht (46) identifiziert, *wobei die Alarmierungs-Kurznachricht (46) eine Bestätigungskennung (52) zur Anforderung einer Bestätigung enthält,*
*c) Auswerten der Bestätigungskennung (52) **durch** das Identifikationsmodul (58)*,
d) Auslösen eines Alarmzustandes des Mobilfunkendgeräts (36, 38, 40, 42, 44) des Mobilfunkteilnehmers (26, 28, 30, 32, 34) **durch** das Identifikationsmodul (58) *und*
*e) Versenden einer Empfangsbestätigung (68), mit einer Statusmeldung des Mobilfunkendgeräts (36, 38, 40, 42, 44), **durch** das Identifikationsmodul (58) an die computergestützte Leitstelle (16), ob ein Mobilfunkteilnehmer (26, 28, 30, 32, 34) erreichbar und einsatzfähig ist*

7. Verfahren zur Bearbeitung einer Alarmierungs-Kurznachricht (46) durch ein Mobilfunkendgerät (36, 38, 40, 42, 44) eines Mobilfunkteilnehmers (26, 28, 30, 32, 34) in einem Mobilfunknetz (10) nach Anspruch *6*, **dadurch gekennzeichnet, dass** durch eine Nutzereingabe das Aufrufen der Alarmierungs-Kurznachricht (46) indiziert und/oder eine Antwortnachricht (68) an die *computergestützte* Leitstelle (16) erzeugt wird.

8. Verfahren zur Bearbeitung einer Alarmierungs-Kurznachricht durch ein Mobilfunkendgerät (36, 38, 40, 42, 44) eines Mobilfunkteilnehmers (26, 28, 30, 32, 34) in einem Mobilfunknetz (10) nach einem der Ansprüche *6* oder *7*, **dadurch gekennzeichnet, dass** eine Bestätigungskennung (52) erkannt wird und/oder eine Bestätigungskennung (68) in eine Antwortnachricht eingefügt wird.

9. *Computergestützte* Leitstelle (16) zur Koordinierung von Alarmrufen, wobei die *computergestützte* Leitstelle (16) mit einer Vermittlungsstelle (18) des Mobilfunknetzes (10) gekoppelt ist, enthaltend
a) Mittel zum Erzeugen einer Alarmierungs-Kurznachricht (46) *als SMS bzw. MMS,*
b) Übertragungsmittel zum Versenden der Alarmierungs-Kurznachricht (46) über das Mobilfunknetz (10) an ein Mobilfunkendgerät (36, 38, 40, 42, 44) eines zu alarmierenden Mobilfunkteilnehmers (26, 28, 30, 32, 34)
**gekennzeichnet durch**
c) Mittel zum Einfügen einer Codesequenz (50) *in die Alarmierungs-Kurznachricht,* welche das Mobilfunkendgerät (36, 38, 40, 42, 44) des zu alarmierenden Mobilfunkteilnehmers (26, 28, 30, 32, 34) in einen Alarmzustand versetzt, *wobei die Alarmierungs-Kurznachricht (46) eine Gruppenkennung (54) enthält, mit der die Vermittlungsstelle (18) feststellt, wer die Alarmierungs-Kurznachricht (46) erhalten soll,*
*d) Mittel zum Einfügen einer Bestätigungskennung (52) in die Alarmierungs-Kurznachricht (46) zur Anforderung einer Bestätigung,*
*e) Mittel zur Verarbeitung der Statusmeldung des Mobilfunkendgeräts (36, 38, 40, 42, 44) des zu alarmierenden Mobilfunkteilnehmers (26, 28, 30, 32, 34), ob ein Mobilfunkteilnehmer (26, 28, 30, 32, 34) erreichbar und einsatzfähig ist.*

10. *Computergestützte* Leitstelle (16) zur Koordinierung von Alarmrufen nach Anspruch *9*, **gekennzeichnet durch** Mittel, welche aus der Bestätigungskennung der Alarmierungs-Kurznachricht das Mobilfunkendgerät (36, 38, 40, 42, 44) zu einer Statusmeldung an die Leitstelle veranlasst.

11. Mobilfunkendgerät (36, 38, 40, 42, 44) eines zu alarmierenden Mobilfunkteilnehmers (26, 28, 30, 32, 34) in einem Mobilfunknetz (10), wobei eine Alarmierung mit einer Alarmierungs-Kurznachricht (46) *als SMS bzw. MMS* erfolgt, welche mit einer Codesequenz durch eine *computergestützte* Leitstelle erzeugt und über eine Vermittlungsstelle (18) des Mobilfunknetzes (10) zum Mobilfunkendgerät (36, 38, 40, 42, 44) übermittelt wird, **dadurch gekennzeichnet, dass** die Alarmierungs-Kurznachricht (46) eine Bestätigungskennung (52) zur Anforderung einer Bestätigung enthält und dass ein Identifikationsmodul (58) vorgesehen ist, welches die *Codesequenz der* Alarmierungs-Kurznachricht (46) auswertet und das Mobilfunkendgerät (36, 38, 40, 42, 44) in einen Alarmierungszustand versetzt *und das Identifikationsmodul (58) Mittel zum Erzeugen und Versenden einer Empfangsbestätigung und des Status des Mobilfunkendgeräts (36, 38, 40, 42, 44) an die computergestützte Leitstelle (16) enthält, ob ein Mobilfunkteilnehmer (26, 28, 30, 32, 34) erreichbar und einsatzfähig ist.*

## Claims

1. A method for alerting a mobile subscriber (26, 28, 30, 32, 34) with a mobile terminal (36, 38, 40, 42, 44) via a mobile radio network (10), wherein a computer-based control center (16) is coupled with a switching center (18) of the mobile radio network (10) for coordination of alarm calls, **characterized by** the following steps:
a) generating an alerting short message (46) by inserting a code sequence (50) into an SMS or MMS by the computer-based control center (16), wherein the alerting short message (46) comprises a group identifier (54), with which the switching center (18) determines who should receive the alerting short message (46),
b) inserting an acknowledgement code (52) into the alerting short message (46) by the computer-based control center (16) for requesting an acknowledgement,
c) sending the alerting short message (46) via the mobile radio network (10) to an identification module (58) of the mobile radio terminal (36, 38, 40, 42, 44) to be alerted,
d) evaluation of the code sequence (50) of the alerting short message (46) by the identification module (58) for detection of the short message being an alerting short message,
e) evaluation of the acknowledgement code (52) by the identification module (58),
f) setting the mobile terminal (36, 38, 40, 42, 44) in a state of alarm by the identification module (58), and
g) sending an acknowledgement of receipt (68) with a status report of the mobile terminal (36, 38, 40, 42, 44) to the computer-based control station (16) by the identification module (58), whether a mobile subscriber (26, 28, 30 32, 34) is reachable and ready for operation.

2. A method for alerting a mobile subscriber (26, 28, 30, 32, 34) with a mobile terminal (36, 38, 40, 42, 44) via a mobile network (10) according to claim 1, **characterized in that** the mobile subscriber (26 , 28, 30, 32, 34) to be alerted is a member of a group (24), wherein each group member (26, 28, 30, 32, 34) receives the alerting short message (46).

3. A method for alerting a mobile subscriber (26, 28, 30, 32, 34) with a mobile terminal (36, 38, 40, 42, 44) via a mobile radio network (10) according to any one of claims 1 to 2, **characterized in that** the evaluation of the acknowledgement code (52) of the alerting short message (46) is carried out by means of a software application, which is provided in a memory (60) of a SIM card (62).

4. A method for alerting a mobile subscriber (26, 28, 30, 32, 34) with a mobile terminal (36, 38, 40, 42, 44) via a mobile radio network (10) according to any one of claims 1 to 3, **characterized in that** setting the mobile radio terminal in a state of alarm is carried out by means of an application, which is provided in a memory (60) of a SIM card (62).

5. A method for alerting a mobile subscriber (26, 28, 30, 32, 34) with a mobile terminal (36, 38, 40, 42, 44) via a mobile radio network (10) according to any one of claims 1 to 4, **characterized in that** the alerting short message (46) is encrypted by the computer-based control center (16) and is decrypted by a decoder (64) in the mobile terminal (36, 38, 40, 42, 44) of the mobile subscriber (26, 28, 30, 32, 34) to be alerted.

6. A method for processing an alerting short message (46) by a mobile terminal (36, 38, 40, 42, 44) of a mobile subscriber (26, 28, 30, 32, 34) in a mobile radio network (10), comprising the following steps:
a) receiving the alerting short message (46) which was created by the computer-based control station (16) by inserting a code sequence (50) into an SMS or MMS,
**characterized by**
b) detecting the code sequence (50) by means of an identification module (58), which identifies the short message as alerting short message (46), wherein the alerting short message (46) comprises an acknowledgement code (52) for requesting an acknowledgement,
c) evaluating the acknowledgement code (52) by the identification module (58),
d) triggering a state of alarm of the mobile terminal (36, 38, 40, 42, 44) of the mobile subscriber (26, 28, 30, 32, 34) by the identification module (58), and
e) sending an acknowledgement of receipt (68) with a status report of the mobile terminal (36, 38, 40, 42, 44) to the computer-based control center (16) by the identification module (58), whether a mobile subscriber (26, 28, 30 32, 34) is reachable and ready for operation.

7. A method for processing an alerting short message (46) by a mobile terminal (36, 38, 40, 42, 44) of a mobile subscriber (26, 28, 30, 32, 34) in a mobile radio network (10) according to claim 6, **characterized in that** a calling up of the alerting short message (46) is indicated and / or a response message (68) to the computer-based control station (16) is generated by a user input.

8. A method for processing an alerting short message (46) by a mobile terminal (36, 38, 40, 42, 44) of a mobile subscriber (26, 28, 30, 32, 34) in a mobile radio network (10) according to any one of claims 6 or 7, **characterized in that** an acknowledgement code (52) is detected and / or an acknowledgement code (68) is inserted into a response message.

9. Computer-based control center (16) for coordination of alarm calls, wherein the computer-based control center (16) is coupled to a switching center (18) of the mobile radio network (10), comprising
a) means for generating an alerting short message (46) as an SMS or MMS,
b) transmission means for sending the alerting short message (46) via the mobile radio network (10) to a mobile terminal (36, 38, 40, 42, 44) of an mobile subscriber (26, 28, 30, 32, 34) to be alerted,
**characterized by**
c) means for inserting a code sequence (50) into the alerting short message, which sets the mobile terminal (36, 38, 40, 42, 44) of the mobile subscriber (26, 28, 30, 32, 34) to be alerted in a state of alarm, wherein the alerting short message (46) comprises a group identifier (54), with which the switching center (18) determines, who should receive the alerting short message (46),
d) means for inserting an acknowledgement code (52) into the alerting short message (46) for requesting an acknowledgement,
e) means for processing the status report of the mobile terminal (36, 38, 40, 42, 44) of the mobile subscriber (26, 28, 30, 32, 34) to be alerted, whether a mobile subscriber (26, 28, 30, 32, 34) is reachable and ready for operation.

10. Computer-based control center (16) for coordination of alarm calls according to claim 9, **characterized by** means causing a status report to the control center by the mobile terminal (36, 38, 40, 42, 44) from the acknowledgement code of the alarming short message.

11. Mobile terminal (36, 38, 40, 42, 44) of a mobile subscriber (26, 28, 30, 32, 34) to be alerted in a mobile radio network (10), wherein an alerting is carried out with an alerting short message (46) as SMS or MMS, which is generated with a code sequence by a computer-based control center and is transmitted via a switching center (18) of the mobile radio network (10) to the mobile terminal (36, 38, 40, 42, 44), **characterized in that** the alerting short message (46) comprises an acknowledgement code (52) for requesting an acknowledgement, and that an identification module (58) is provided, which evaluates the code sequence of the alerting short message (46) and sets the mobile terminal (36, 38, 40, 42, 44) in a state of alarm, and the identification module (58) comprises means for generating and sending an acknowledgement of receipt and the status of the mobile terminal (36, 38, 40, 42, 44) to the computer-based control station (16), whether a mobile subscriber (26, 28, 30, 32, 34) is reachable and ready for operation.

## Revendications

1. Procédé pour alerter un utilisateur de radiotéléphonie mobile (26, 28, 30, 32, 34) avec un terminal de radiotéléphonie mobile (36, 38, 40, 42, 44) par l'intermédiaire d'un réseau de radiotéléphonie mobile (10), un poste de commande (16), assisté par ordinateur, étant couplé à un poste de commutation (18) du réseau de radiotéléphonie mobile (10) afin de coordonner des appels d'alerte, **caractérisé par** les étapes de procédé suivantes :
(a) génération d'un message d'alerte court (46) par insertion d'une séquence de code (50) dans un SMS ou un MMS effectuée par le poste de commande (16), assisté par ordinateur, le message d'alerte court (46) contenant un identifiant de groupe (54) permettant au poste de commutation (18) de déterminer la personne qui devra recevoir le message d'alerte court (46),
(b) insertion d'un identifiant de confirmation (52) dans le message d'alerte court (46) effectuée par le poste de commande (16), assisté par ordinateur, afin de demander une confirmation,
(c) envoi du message d'alerte court (46) par l'intermédiaire du réseau de radiotéléphonie mobile (10) à un module d'identification (58) du terminal de radiotéléphonie mobile (36, 38, 40, 42, 44) à alerter,
(d) évaluation de la séquence de code (50) du message d'alerte court (46) par le module d'identification (58) afin de reconnaître le message court comme étant un message d'alerte court,
(e) évaluation de l'identifiant de confirmation (52) par le module d'identification (58),
(f) mise en état d'alerte du terminal de radiotéléphonie mobile (36, 38, 40, 42, 44) par le module d'identification (58) et,
(g) envoi d'une confirmation de réception (68) avec un message d'état du terminal de radiotéléphonie mobile (36, 38, 40, 42, 44) par le module d'identification (58) au poste de commande (16), assisté par ordinateur, pour savoir si un utilisateur de radiotéléphonie mobile (26, 28, 30, 32, 34) est joignable et opérationnel.

2. Procédé pour alerter un utilisateur de radiotéléphonie mobile (26, 28, 30, 32, 34) avec un terminal de radiotéléphonie mobile (36, 38, 40, 42, 44) par l'intermédiaire d'un réseau de radiotéléphonie mobile (10) selon la revendication 1, **caractérisé en ce que** l'utilisateur de radiotéléphonie mobile (26, 28, 30, 32, 34) à alerter est membre d'un groupe (24), chaque membre du groupe (26, 28, 30, 32, 34) recevant le message d'alerte court (46).

3. Procédé pour alerter un utilisateur de radiotéléphonie mobile (26, 28, 30, 32, 34) avec un terminal de radiotéléphonie mobile (36, 38, 40, 42, 44) par l'intermédiaire d'un réseau de radiotéléphonie mobile (10) selon l'une quelconque des revendications 1 à 2, **caractérisé en ce que** l'évaluation de l'identifiant de confirmation (52) du message d'alerte court (46) est réalisée à l'aide d'une application logiciel présente dans une mémoire (60) de carte SIM (62).

4. Procédé pour alerter un utilisateur de radiotéléphonie mobile (26, 28, 30, 32, 34) avec un terminal de radiotéléphonie mobile (36, 38, 40, 42, 44) par l'intermédiaire d'un réseau de radiotéléphonie mobile (10) selon l'une quelconque des revendications 1 à 3, **caractérisé en ce que** la mise en alerte du terminal de radiotéléphonie mobile est réalisée à l'aide d'une application présente dans une mémoire (60) de carte SIM (62).

5. Procédé pour alerter un utilisateur de radiotéléphonie mobile (26, 28, 30, 32, 34) avec un terminal de radiotéléphonie mobile (36, 38, 40, 42, 44) par l'intermédiaire d'un réseau de radiotéléphonie mobile (10) selon l'une quelconque des revendications 1 à 4, **caractérisé en ce que** le message d'alerte court (46) est codé par le poste de commande (16), assisté par ordinateur, et est décodé à l'aide d'un décodeur (64) situé dans le terminal de radiotéléphonie mobile (36, 38, 40, 42, 44) de l'utilisateur de radiotéléphonie mobile (26, 28, 30, 32, 34) à alerter.

6. Procédé pour le traitement d'un message d'alerte court (46) par un terminal de radiotéléphonie mobile (36, 38, 40, 42, 44) d'un utilisateur de radiotéléphonie mobile (26, 28, 30, 32, 34) dans un réseau de radiotéléphonie mobile (10), comprenant les étapes de procédé suivantes :
(a) réception du message d'alerte court (46) généré par le poste de commande (16), assisté par ordinateur, en insérant une séquence de code (50) dans un SMS ou un MMS,
**caractérisé par**
(b) la détection de la séquence de code (50) au moyen du module d'identification (58) qui identifie le message court comme étant un message d'alerte court (46), le message d'alerte court (46) contenant un identifiant de confirmation (52) afin de demander une confirmation,
(c) évaluation de l'identifiant de confirmation (52) par le module d'identification (58),
(d) déclenchement d'un état d'alerte du terminal de radiotéléphonie mobile (36, 38, 40, 42, 44) de l'utilisateur de radiotéléphonie mobile (26, 28, 30, 32, 34) par le module d'identification (58) et
(e) envoi d'une confirmation de réception (68) avec un message d'état du terminal de radiotéléphonie mobile (36, 38, 40, 42, 44) par le module d'identification (58) au poste de commande (16), assisté par ordinateur, pour savoir si un utilisateur de radiotéléphonie mobile (26, 28, 30, 32, 34) est joignable et opérationnel.

7. Procédé pour le traitement d'un message d'alerte court (46) par un terminal de radiotéléphonie mobile (36, 38, 40, 42, 44) d'un utilisateur de radiotéléphonie mobile (26, 28, 30, 32, 34) dans un réseau de radiotéléphonie mobile (10) selon la revendication 6, **caractérisé en ce que** l'appel du message d'alerte court (46) est indiqué par une entrée d'utilisateur et/ou un message réponse (68) est généré et envoyé au poste de commande (16), assisté par ordinateur.

8. Procédé pour le traitement d'un message d'alerte court (46) par un terminal de radiotéléphonie mobile (36, 38, 40, 42, 44) d'un utilisateur de radiotéléphonie mobile (26, 28, 30, 32, 34) dans un réseau de radiotéléphonie mobile (10) selon l'une quelconque des revendications 6 ou 7, **caractérisé en ce qu'**un identifiant de confirmation (52) est reconnu et/ou un identifiant de confirmation (68) est inséré dans un message réponse.

9. Poste de commande (16), assisté par ordinateur, destiné à coordonner des appels d'alerte, le poste de commande (16), assisté par ordinateur, étant couplé à un poste de commutation (18) du réseau de radiotéléphonie mobile (10), comprenant
(a) des moyens de génération d'un message d'alerte court (46) sous forme de SMS ou de MMS,
(b) des moyens de transmission destinés à envoyer le message d'alerte court (46) à un terminal de radiotéléphonie mobile (36, 38, 40, 42, 44) d'un utilisateur de radiotéléphonie mobile (26, 28, 30, 32, 34) à alerter par l'intermédiaire du réseau de radiotéléphonie mobile (10)
**caractérisé par**
(c) des moyens destinés à insérer une séquence de code (50) dans le message d'alerte court mettant en alerte le terminal de radiotéléphonie mobile (36, 38, 40, 42, 44) de l'utilisateur de radiotéléphonie mobile (26, 28, 30, 32, 34) à alerter, le message d'alerte court (46) contenant un identifiant de groupe (54) permettant au poste de commutation (18) de déterminer la personne qui devra recevoir le message d'alerte court (46),
(d) des moyens destinés à insérer un identifiant de confirmation (52) dans le message d'alerte court (46) afin de demander une confirmation,
e) des moyens destinés à traiter le message d'état du terminal de radiotéléphonie mobile (36, 38, 40, 42, 44) de l'utilisateur de radiotéléphonie (26, 28, 30, 32, 34) à alerter pour savoir si un utilisateur de radiotéléphonie mobile (26, 28, 30, 32, 34) est joignable et opérationnel.

10. Poste de commande (16), assisté par ordinateur, destiné à coordonner des appels d'alerte selon la revendication 9, **caractérisé par** des moyens permettant au terminal de radiotéléphonie (36, 38, 40, 42, 44) d'envoyer un message d'état au poste de commande à partir de l'identifiant de confirmation du message d'alerte court.

11. Terminal de radiotéléphonie mobile (36, 38, 40, 42, 44) d'un utilisateur de radiotéléphonie mobile (26, 28, 30, 32, 34) à alerter dans un réseau de radiotéléphonie mobile (10), l'alerte étant effectuée par un message d'alerte court (46) sous forme de SMS ou MMS généré à l'aide d'une séquence de code par un poste de commande, assisté par ordinateur, et transmis au terminal de radiotéléphonie mobile (36, 38, 40, 42, 44) par l'intermédiaire d'un poste de commutation (18) du réseau de radiotéléphonie (10), **caractérisé en ce que** le message d'alerte court (46) contient un identifiant de confirmation (52) afin de demander une confirmation et qu'il est prévu un module d'identification (58) qui évalue la séquence de code du message d'alerte court (46) et met en alerte le terminal de radiotéléphonie mobile (36, 38, 40, 42, 44) et le module d'identification (58) contient des moyens pour la génération et l'envoi d'une confirmation de réception ainsi que du statut du terminal de radiotéléphonie mobile (36, 38, 40, 42, 44) au poste de commande (16), assisté par ordinateur, pour savoir si un utilisateur de radiotéléphonie mobile (26, 28, 30, 32, 34) est joignable et opérationnel.
